# EUROPÄISCHE PATENTANMELDUNG

(11) **EP 0 644 026 A1**
(43) Veröffentlichungstag der Anmeldung: **22.03.1995**
(21) Anmeldenummer: 94113666.5
(22) Anmeldetag: 01.09.1994
(51) Int. Cl.: B29B 13/02, B29C 33/60, B29B 13/04, B29C 63/40, C10C 3/18

(54) **Verfahren zur Herstellung von Rohlingen für Fahrbahnmarkierungsmaterial und Bitumen sowie Vorrichtung zur Durchführung dieses Verfahrens**

(30) Priorität: 13.09.1993 DE 4331008
(71) Anmelder: Inhaco Industrieanlagen GmbH & Co. KG, D-50999 Köln (DE)
(72) Erfinder: Tuchscherer, Rolf, D-50389 Wesseling (DE)
(74) Vertreter: Bauer, Wulf, Dr.

(57) **Zusammenfassung**

Bei dem Verfahren zur Herstellung von Rohlingen für Fahrbahnmarkierungsmaterial und Bitumen werden die Bestandteile des Materials in einem Kocher (20) aufgeschmolzen und vermischt, das flüssige Material wird in eine mit einem Trennmittel beschichtete Form (26) gegeben wird und das erstarrte Material zum Einsatzort transportiert, dort erwärmt und auf eine Fahrbahn aufgetragen. Es sind mehrere vielfach verwendbare, mit einem Trennmittel beschichtete Formen (26) vorgesehen. Das Material nach Erstarren aus den Formen (26) entfernt und mit einer Polyäthylenfolie umhüllt.

## Beschreibung

Die Erfindung bezieht sich auf ein Verfahren zur Herstellung von Rohlingen für Fahrbahnmarkierungsmaterial und Bitumen, bei welchem Verfahren die Bestandteile des Materials in einem Kocher aufgeschmolzen und vermischt werden, das flüssige Material in eine mit einem Trennmittel beschichtete Form gegeben wird und das erstarrte Material zum Einsatzort transportiert, dort erwärmt und auf eine Fahrbahn aufgetragen wird.

Markierungsmaterial für Fahrbahnen dieser Art ist üblicherweise weiß, teilweise auch gelb gefärbt und hat Beimengungen wie beispielsweise Quarzsand oder Glaskugeln, die ein besseres Erkennen der Markierung bewirken. Mit dem Markierungsmaterial werden Leitlinien, Hinweispfeile, Wartelinien, Schriftzeichen und die Wiedergabe von Verkehrsschildern auf Fahrbahnen erstellt. Hierzu wird das heiße dünne Material unmittelbar auf die Straßenoberfläche aufgetragen, es gleicht sich an diese an und verklebt. Das Markierungsmaterial besteht im wesentlichen aus einem Thermoplasten, der dünnschichtig aufgetragen wird. Die Erfindung betrifft nicht reine Farbaufträge für Fahrbahnmarkierungen.

Nach dem Stand der Technik werden die Rohlinge wie folgt hergestellt: Das aus dem im Kocher entnommene, flüssige Material wird in Einwegformen eingegossen, die aus Pappe erstellt sind, mit dem Trennmittel beschichtet sind und eine geringe Höhe haben. Typischerweise haben die Rohlinge Abmessungen 40 x 40 x 5 cm, dementsprechend sind auch die Einwegformen ausgebildet. Das flüssige Material erstarrt in den Einwegformen durch Erkalten, zumeist über Nacht, es füllt die Einwegformen nicht vollständig aus, vielmehr bleibt ein Kartonrand von typischerweise 10 - 15 mm oberhalb der Oberfläche des Materials frei. Die Rohlinge werden nicht aus den Einwegformen herausgenommen, die Einwegformen werden erst am Einsatzort vom Fahrbahnmarkierungsmaterial abgerissen, bevor dieses wieder erwärmt wird. Dieses Abreißen bedeutet Arbeit und damit Kosten, weiterhin müssen die abgerissenen Einwegformen, die nicht mehr gebraucht werden können, entsorgt werden. Da die Formen mit einem Trennmittel beschichtet sind, sind sie Sonderabfall und müssen als solcher entsorgt werden. Durch den überstehenden Rand der Einwegformen ist ein Stapeln der mit dem Markierungsmaterial gefüllten Formen praktisch nicht möglich, weil dies einerseits durch den Rand behindert wird, andererseits, ein Stapeln tatsächlich durchgeführt wird, die Gefahr besteht, daß das Markierungsmaterial der offenen Formen an der Unterseite der darüberliegenden Form anbackt bzw. anklebt. Entsprechendes gilt ebenso für Bitumen.

Hier setzt nun die Erfindung ein. Sie hat es sich zur Aufgabe gemacht, daß Verfahren der Eingangs genannten Art zu verbessern und so weiter zu entwickeln, daß die Rohlinge ohne Gefahr eines wechselseitigen Anbackens oder Verklebens stapelbar sind und das Abreißen der Einwegform am Einsatzort entfällt, wobei auch die Entsorgung der abgerissenen Einwegformen nicht mehr notwendig ist. Ein weiteres Ziel der Erfindung ist es, eine entsprechende Vorrichtung, die zur Durchführung dieses Verfahrens geeignet ist, anzugeben.

Verfahrensmäßig wird die Aufgabe ausgehend von dem Verfahren mit den Merkmalen der eingangs genannten Art dadurch gelöst, daß mehrere vielfach verwendbare, mit einem Trennmittel beschichtete Formen vorgesehen sind, daß das Material nach Erstarren aus den Formen entfernt und mit einer Polyäthylenfolie, im folgenden auch PE-Folie genannt, umhüllt wird.

Erfindungsgemäß werden also nicht mehr Einwegformen, sondern vielfach verwendbare Formen benutzt. Sie sind ebenso mit einem Trennmittel beschichtet wie die bekannten Einwegformen. Das Entformen erfolgt am Herstellungsort der Rohlinge und nicht mehr auf der Baustelle, also am Einsatzort. Abfall aus Einwegformen fällt nicht mehr an.

Ein ganz besonderer Vorteil liegt in der Umhüllung mit einer dünnen Polyäthylenfolie. Durch diese Umhüllung werden die Rohlinge stapelbar, ohne daß die Gefahr besteht, daß bei Anweichen der Oberfläche die gestapelten Schichten miteinander verkleben. Insoweit wirkt die Folie also als Separationsmittel. Die Folie muß nicht von den Rohlingen entfernt werden, wenn diese am Einsatzort für das Auftragen auf die Fahrbahn aufgeschmolzen werden. Es kann die komplette Einheit aus mit Folie umhülltem Rohling in einen der Aufschmelzung dienenden Kocher geworfen werden, die Folien schmelzen mit auf, vermischen sich oder bilden kleine Einschlüsse, z.B. Kügelchen, im Markierungsmaterial. Da dünne Folie eingesetzt wird, ist der Anteil an Polyäthylen relativ gering. Die Erfindung ermöglicht somit, den arbeitsaufwendigen Auspackvorgang am Einsatzort zu vermeiden, Verpackungsmaterial muß nicht entsorgt werden, dies vereinfacht und beschleunigt die Arbeiten am Einsatzort, beseitigt Umweltprobleme.

Insgesamt beschleunigt das erfindungsgemäße Verfahren die Herstellung der Rohlinge, erleichtert ihren Transport zum Einsatzort und vereinfacht die Arbeitsgänge am Einsatzort deutlich, Probleme mit Abfallmaterial entfallen.

In einer Weiterentwicklung werden die mit der PE-Folie umhüllten Rohlinge auf einer Palette gestapelt und stehen damit für den Transport zum Einsatzort zur Verfügung. Durch das Stapeln wird Transportraum und Platz am Einsatzort gespart. In einer weiteren Verbesserung wird die PE-Folie nach dem Aufziehen und Umhüllen einem Schrumpfvorgang unterworfen. Dadurch liegt die Folie eng am Rohling an, was die praktische Handhabung der Rohlinge vereinfacht und einer ungewollten Beschädigung der Folie entgegenwirkt.

In einer weiteren Verbesserung sind die Formen, in denen die Rohlinge hergestellt werden, mit Mitteln zum Ausformen der Rohlinge ausgestattet, vorzugsweise sind die Formen zweigeteilt und werden geöffnet, damit der Rohling unter seinem Eigengewicht herausfallen kann. Dadurch wird ein automatisierbares Entformen erreicht. In einer weiteren Verbesserung sind die Formen mit Haltestegen ausgerüstet, diese vermeiden, daß ein Rohling bereits aus einer Form herausfällt, bevor er die Entformstation erreicht hat.

In einer weiteren Weiterbildung wird das Erstarren des Materials durch einen aktiven Abkühlschritt unterstützt, insbesondere werden die gefüllten Formen mit gekühltem Wasser (z.B. 5 °C) benetzt, beispielsweise mit einer Sprinkleranlage beregnet. Dadurch wird der Abkühlvorgang beschleunigt, es läßt sich eine taktweise arbeitende Vorrichtung ohne stundenlange Abkühlzyklen erstellen.

In einer anderen Weiterbildung wird beim Vorgang des Befüllens der Formen mit flüssigem Material das Gewicht des eingefüllten Materials erfaßt, dadurch ist sichergestellt, daß die Rohlinge untereinander gleichen Rauminhalt haben, was wiederum zur einfacheren Stapelbarkeit beiträgt und den praktischen Einsatz der Rohlinge vereinfacht.

Vorrichtungsmäßig wird die Aufgabe gelöst durch eine Vorrichtung zur Herstellung von Rohlingen für Fahrbahnmarkierungsmaterial und Bitumenblöcke, die in an sich bekannter Art einen Kocher, eine Füllstation und mit Trennmittel beschichtete Formen aufweist und die dadurch gekennzeichnet ist, daß vielfach verwendbare, auf einem Förderer angeordnete Formen vorgesehen sind, daß eine Anordnung zum Entformen vorhanden ist und daß die Vorrichtung einen Folienautomaten aufweist, in dem die erstarrten Rohlinge mit einer Polyäthylenfolie umhüllt werden.

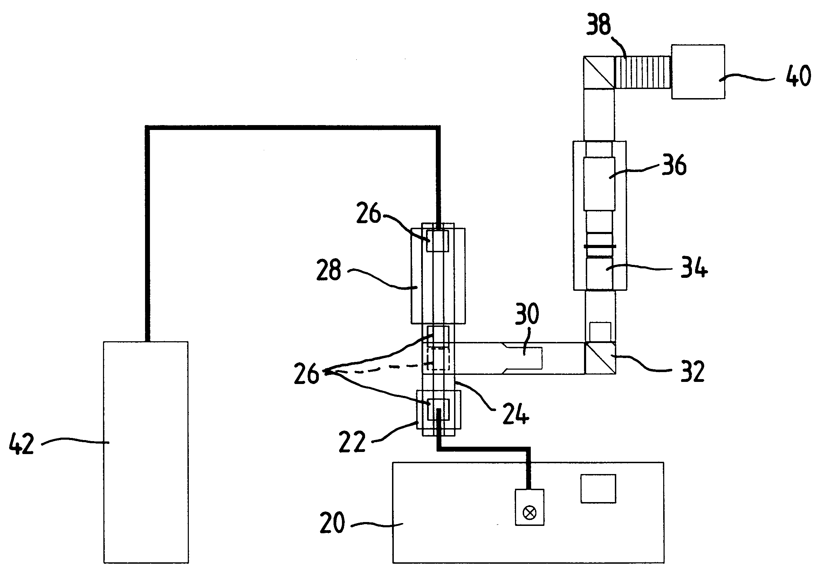

Weitere Vorteile und Merkmale der Erfindung ergeben sich aus den übrigen Ansprüchen sowie aus der nun folgenden Beschreibung eines nicht einschränkend zu verstehenden Ausführungsbeispiels, das unter Bezugnahme auf die Zeichnung näher erläutert wird. Die Zeichnung zeigt in ihrer einzigen Figur eine schematisch dargestellte Anlage für die Herstellung von Rohlingen für Fahrbahnmarkierungsmaterial oder Bitumenblöcke.

Wie die Figur zeigt, wird ein Kocher 20 manuell oder vollautomatisch mit den Bestandteilen beschickt, aus dem das Material für die Fahrbahnmarkierung oder der Bitumenblöck erstellt werden soll. Dieser Schritt ist bekannt, so daß auf ihn nicht im einzelnen eingegangen werden muß. Aus dem Kocher wird das schmelzflüssige Material einer Dosierstation 22 zugeführt. Dies kann über eine Pumpe, über Ausfließen unter Schwerkraft oder eine andere geeignete Fördervorrichtung erfolgen. Die Dosierstation 22 befindet sich oberhalb eines Kettenförderers 24. Auf diesem sind hintereinander eine Vielzahl von Formen 26 angeordnet, sie sind innen mit einem ansich bekannten Trennmittel beschichtet. Die Formen 26 sind aus zwei Formhälften aufgebaut, sie können quer zu einer Trennfläche voneinander getrennt werden.

Die Vorrichtung arbeitet taktweise. Die jeweils unter der Dosierstation 22 befindliche Form 26 wird von einer Wägezelle, auch Meßdose genannt, unterstützt, so daß das Gewicht des eingefüllten, schmelzflüssigen Materials gemessen werden kann. Ist ausreichend Material eingefüllt, wird der Einfüllvorgang beendet. Der Kettenförderer 24 fördert nun weiter in Richtung zu einem Kühlautomaten 28. Dort wird die Form 26 mit ihrem noch schmelzflüssigen Inhalt mit gekühltem Wasser, das typischerweise mit Temperatur von etwa 5° C hat, beregnet. Die Form bleibt über mehrere Taktzyklen der Vorrichtung innerhalb des Kühlautomatens und verläßt diesen in einem Zustand, in dem das Material erstarrt ist, und zwar bis in den Kern hinein. Da die gegossenen Rohlinge typischerweise eine Dicke von 5 cm haben, ist die Abkühlung trotz der sonstigen, größeren Abmessungen 40 x 40 cm einfach zu erreichen.

Nach Verlassen des Kühlautomaten wird der Kettenförderer 24 umgelenkt, es beginnt der Untertrum des Kettenförderers 24. Demgemäß sind die Formen nun gestürzt, sie sind nach unten offen. Bereits nach dem Stürzen kann es passieren, daß die abgekühlten Rohlinge nach unten aus der Form herausfallen. Ein komplettes Herausfallen wird durch Stege behindert, die mit der Form verbunden sind und unterhalb dieser vorspringen. Auf diese Stege kommt der Rohling zur Auflage, sollte er zu früh aus der Form herausfallen.

Der eigentliche Entformvorgang findet oberhalb eines Förderbandes 30 statt, die im jeweiligen Taktzyklus dort befindliche Form 26 wird geöffnet, so daß der Rohling nach unten auf das Förderband 30 fallen kann. Dabei fahren die Stege mit den Formhälften ebenfalls auseinander, so daß ein bereits abgefallener Rohling nun freigegeben wird. Das Förderband 30 bringt den nackten Rohling zu einer Positioniereinrichtung 32, dort wird der Rohling exakt zum Förderband ausgerichtet. Dieses Ausrichten dient im wesentlichen dazu, daß der darauffolgende Folienautomat 34 korrekt arbeiten kann. Im Folienautomat läuft der Rohling gegen eine quer geführte Bahn einer Polyäthylenfolie. Er stößt gegen diese Bahn, etwa in deren Mitte, so daß sich ein oberes Teil der Bahn und ein unteres Teil auf die Ober- bzw. Unterseite des Rohlings legen können. Darauf folgend wird die Folie geschnitten und es werden die Ränder verschweißt. Nach Ausgang aus dem Folienautomaten ist der Rohling vollständig umhüllt mit einer dünnen Folie aus PE, die Dicke beträgt typischerweise 80 Mikrometer.

Hinter dem Folienautomaten 34 folgt ein Schrumpftunnel 36, in ihm wird kurzzeitig, beispielsweise über eine Sekunde, eine so ausreichende Wärme, vorzugsweise durch Warmluft, zugeführt, daß die Folie schrumpft und unmittelbar am Rohling anliegt.

Der Rohling ist nunmehr verpackt und fertiggestellt, gelangt auf ein Rollenband 38 und von dort auf einen Auffangtisch 40. Von diesem wird er entnommen und auf einer Palette gestapelt.

Während des Transports und bis zum späteren Einsatz verhindert die Folie, daß bei Temperaturerhöhungen die Oberflächen der Rohlinge nicht miteinander verkleben bzw. aneinander anbacken können. Bei einem LKW-Transport, bei Aufbewahrung und dergleichen können durchaus Temperaturen im Bereich von 40° - 60° auftreten, derartige Temperaturen würden zu einem teilweise Anweichen des Rohlings führen mit der Folge, daß danach unverpackte Rohlinge nur schwer und teilweise nicht mehr von einander zu trennen wären. Durch die Folie wird dies verhindert.

Auf dem Einsatzort muß die Folie nicht entfernt werden. Vielmehr wird der mit der Folie versehene Rohling unmittelbar in einen Kocher gegeben, daß dann gewonnene, flüssige Material kann unmittelbar aufgetragen werden.

Der Kühlautomat 28 ist über eine Leitung mit einem Kühlaggregat 42 verbunden. In dieser Leitung fließt das auf z.B. 20 °C erwärmte Wasser zum Kühlaggregat 42, wird dort wieder auf ca. 5 °C heruntergekühlt und dem Kühlautomaten zugeleitet. Aufgrund des ständigen Umlaufs ist der Wasserverbrauch gering.

## Patentansprüche

1. Verfahren zur Herstellung von Rohlingen für Fahrbahnmarkierungsmaterial und Bitumen, bei welchem Verfahren die Bestandteile des Materials in einem Kocher (20) aufgeschmolzen und vermischt werden, das flüssige Material in eine mit einem Trennmittel beschichtete Form (26) gegeben wird und das erstarrte Material zum Einsatzort transportiert, dort erwärmt und auf eine Fahrbahn aufgetragen wird, dadurch gekennzeichnet, daß mehrere vielfach verwendbare, mit einem Trennmittel beschichtete Formen (26) vorgesehen sind, daß das Material nach Erstarren aus den Formen (26) entfernt und mit einer Polyäthylenfolie umhüllt wird

2. Verfahren nach Anspruch 1, dadurch gekennzeichnet, daß die Rohlinge auf einer Palette übereinander gestapelt werden.

3. Verfahren nach Anspruch 1, dadurch gekennzeichnet, daß nach dem Umhüllen der Rohlinge mit einer PE-Folie ein Schrumpfvorgang durchlaufen wird, vorzugsweise ein Schrumpftunnel kurzfristiger Warmluftzufuhr vorgesehen ist.

4. Verfahren nach Anspruch 1, dadurch gekennzeichnet, daß die Formen ein Mittel zur Entformung aufweisen, insbesondere daß die Formen (26) zweigeteilt sind und die beiden Teilstücke von einander separiert werden können.

5. Verfahren nach Anspruch 1, dadurch gekennzeichnet, daß die nach einer Seite hin offenen Formen (26) von Haltestegen übergriffen werden, die einen vorzeitig entformten Rohling festhalten, den Entformvorgang aber nicht hindern.

6. Verfahren nach Anspruch 1, dadurch gekennzeichnet, daß der Erstarrvorgang des Materials durch eine aktive Abkühlung unterstützt wird, insbesondere daß die gefüllten Formen mit gekühltem Wasser beregnet werden.

7. Verfahren nach Anspruch 1, dadurch gekennzeichnet, daß eine Dosierstation (22) vorgesehen ist, der ein Gewichtsfühler zugeordnet ist.

8. Verfahren nach Anspruch 1, dadurch gekennzeichnet, daß eine Folie mit einer Folienstärke von 50 - 150 Mikrometer, vorzugsweise zwischen 80 und 90 Mikrometer verwendet wird.

9. Vorrichtung zur Durchführung des Verfahrens nach einem der Patentansprüche 1 - 8 mit einem Kocher (20), einer Füllstation und mit Formen (26), die mit einem Trennmittel beschichtet sind, dadurch gekennzeichnet ist, daß vielfach verwendbare, auf einem Förderer (24) angeordnete Formen (26) vorgesehen sind, daß eine Anordnung zum Entformen vorhanden ist und daß die Vorrichtung einen Folienautomaten (34) aufweist, in dem die erstarrten Rohlinge mit einer Polyäthylenfolie umhüllt werden.
